(19) Europäisches Patentamt
European Patent Office
Office européen des brevets

(11) **EP 2 061 227 A1**

(12) **EUROPEAN PATENT APPLICATION**
published in accordance with Art. 153(4) EPC

(43) Date of publication:
**20.05.2009 Bulletin 2009/21**

(51) Int Cl.:
***H04N 1/387*** *(2006.01)* ***G06T 3/40*** *(2006.01)*

(21) Application number: **07792875.2**

(22) Date of filing: **22.08.2007**

(86) International application number:
**PCT/JP2007/066285**

(87) International publication number:
**WO 2008/029625 (13.03.2008 Gazette 2008/11)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **08.09.2006 JP 2006244755**

(71) Applicant: **Sony Corporation Tokyo 108-0075 (JP)**

(72) Inventors:
• **AMANO, Mitsuyasu Tokyo 1080075 (JP)**
• **HOSOI, Takafumi Tokyo 108-0075 (JP)**
• **YAMAMOTO, Kouji Tokyo 108-0075 (JP)**
• **MORINAGA, Eiichiro Tokyo 108-0075 (JP)**

(74) Representative: **Thévenet, Jean-Bruno et al Cabinet Beau de Loménie 158, rue de l'Université 75340 Paris Cédex 07 (FR)**

(54) **IMAGE PROCESSING DEVICE, IMAGE PROCESSING METHOD, AND PROGRAM**

(57) The present invention is an image processing apparatus for changing the resolution of image data in accordance with the distance from a reference point arbitrarily set within a screen showing the image data, including: selection means for selecting, from the image data, calculation-target pixels that are arranged in such a manner that the spacing between pixels becomes larger as the distance from the reference point increases; smoothing processing means for smoothing the calculation-target pixels selected by the selection means using the pixel values of the calculation-target pixels and the pixel values of pixels positioned around the calculation-target pixels; and interpolation processing means for interpolating the pixel values of pixels which have not been selected as the calculation-target pixels by the selection means, from the pixel values of calculation-target pixels positioned around the pixels, the calculation-target pixels having been smoothed by the smoothing processing means.

FIG. 1

**Description**

Technical Field

The present invention relates to an image processing apparatus, an image processing method, and a program that changes the resolution of image data in accordance with the distance from a reference point arbitrarily set within a screen.
The present application claims priority on the basis of Japanese Patent Application No. 2006-244755 filed on September 8, 2006 in Japan, and this application is incorporated herein by reference.

Background Art

Hitherto, in personal computers, various image effects have been added to image data picked up by a digital camera by executing image processing software and performing processing on the image data.
For example, when a soft focus effect is added to a picked-up image, at the time of taking an image, a conventional camera using a silver-salt film requires attachment of a filter such as a soft filter, a low-contrast filter, or the like when taking an image. In contrast, with image processing software executable in a personal computer, image processing can be performed even on an image picked up by a digital camera without the above-described filter and a soft focus effect can be added to this picked-up image.
On the other hand, it has come about that a processing process which requires a relatively large amount of calculation and which had been performed by a computer is easily performed in digital cameras as the processing performance thereof increases.
However, as the number of pixels constituting image data increases in accordance with the need for high-definition images, the amount of calculation increases for adding an image effect to image data constituted by a greater number of pixels.
Thus, in a digital camera, although the processing performance thereof has been improved, the processing performance thereof is lower than the processing performance of a personal computer. Thus, there is a problem in that as the above-described amount of calculation increases, the calculation speed becomes relatively slow.
Japanese Examined Patent Application Publication No. 05-081951 discloses an image processing apparatus for shortening a calculation time necessary for performing filtering processing by performing the filtering processing after an original image is reduced. However, regarding this image processing apparatus, there is a problem in that the resolution of an image is degraded over the entire image.

Disclosure of Invention

Technical Problem

The present invention has been proposed in light of such circumstances, and has a technical task whose object is to provide an image processing apparatus, an image processing method, and a program that change the resolution of image data in accordance with the distance from a reference point arbitrarily set within a screen with a smaller amount of calculation, while degradation of image quality is being suppressed over the entire image.
An embodiment of the present invention proposed to solve the above-described technical task is an image processing apparatus for changing the resolution of image data in accordance with the distance from a reference point arbitrarily set within a screen showing the image data, including: selection means for selecting, from the image data, calculation-target pixels that are arranged in such a manner that the spacing between pixels becomes larger as the distance from the reference point increases; smoothing processing means for smoothing the calculation-target pixels selected by the selection means using the pixel values of the calculation-target pixels and the pixel values of pixels positioned around the calculation-target pixels; and interpolation processing means for interpolating the pixel values of pixels which have not been selected as the calculation-target pixels by the selection means, from the pixel values of calculation-target pixels positioned around the pixels, the calculation-target pixels having been smoothed by the smoothing processing means.
Moreover, another embodiment of the present invention is an image processing method for changing the resolution of image data in accordance with the distance from a reference point arbitrarily set within a screen showing the image data, including: selecting, from the image data, calculation-target pixels that are arranged in such a manner that the spacing between pixels becomes larger as the distance from the reference point increases; smoothing the selected calculation-target pixels using the pixel values of the calculation-target pixels and the pixel values of pixels positioned around the calculation-target pixels; and interpolating the pixel values of pixels which have not been selected as the calculation-target pixels, from the pixel values of calculation-target pixels positioned around the pixels, the calculation-target pixels having been smoothed.

Moreover, another embodiment of the present invention is a program for causing a computer to execute image processing for changing the resolution of image data in accordance with the distance from a reference point arbitrarily set within a screen showing the image data, including: a selection step of selecting, from the image data, calculation-target pixels that are arranged in such a manner that the spacing between individual pixels becomes larger as the distance from the reference point increases; a smoothing-processing step of smoothing the pixel value of the calculation-target pixels selected in the selection step, using the pixel values of the calculation-target pixels and the pixel values of pixels positioned around the calculation-target pixels; and an interpolation-processing step of interpolating the pixel values of pixels which have not been selected as the calculation-target pixels, from the pixel values of calculation-target pixels positioned around the pixels, the calculation-target pixels having been smoothed in the smoothing-processing step.

The present invention selects, from image data, calculation-target pixels that are arranged in such a manner that the spacing between pixels becomes larger as the distance from the reference point increases, smoothes the calculation-target pixels referring to the pixel values of the calculation-target pixels and the pixel values of pixels positioned around the calculation-target pixels, and interpolates the pixel values of pixels which have not been selected as the calculation-target pixels, from the pixel values of calculation-target pixels positioned around the pixels, the calculation-target pixels having been smoothed.

In this way, the present invention changes the spacing between pixels selected as calculation-target pixels from within the screen, in accordance with a required resolution. Thus, while degradation of image quality is being suppressed over the entire image, resolution conversion of image data can be performed with a smaller amount of calculation.

Another technical task of the present invention and specific advantages obtained by the present invention will be more specifically clarified from embodiments described in the following with reference to the drawings.

Brief Description of Drawings

[Fig. 1] Fig. 1 is a diagram schematically showing the structure of each of processing units included in a digital camera.
[Fig. 2] Fig. 2A, Fig. 2B, and Fig. 2C are diagrams schematically showing processing in which the center within a screen is set as a reference point and the resolution of image data is changed in accordance with the distance from this reference point.
[Fig. 3] Fig. 3 is a diagram showing a correspondence relationship between the distance from the reference point and the level of blur.
[Fig. 4] Fig. 4A is a diagram showing a correspondence relationship among the level of blur, a thinning-out step, and a matrix size of filter coefficients, and Fig. 4B is a diagram showing filter coefficients for weighted-average filtering processing whose matrix size is 3 x 3.
[Fig. 5] Fig. 5 is a diagram schematically showing bilinear interpolation processing.
[Fig. 6] Fig. 6A is a flowchart showing an operation of a smoothing processing unit, and Fig. 6B is a flowchart showing an operation of an interpolation processing unit.

Best Modes for Carrying Out the Invention

In the following, best modes for carrying out the present invention will be described in detail with reference to the drawings.

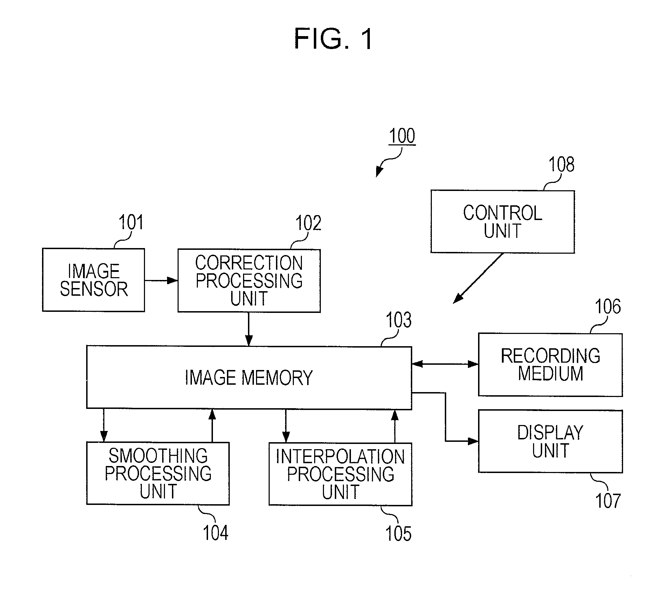

As shown in Fig. 1, a digital camera 100 according to this embodiment includes an image sensor 101, a correction processing unit 102, an image memory 103, a smoothing processing unit 104, an interpolation processing unit 105, a recording medium 106, a display unit 107, and a control unit 108.

The image sensor 101 picks up an image of a subject, reads image data, performs optical correction such as brightness correction, black-level correction, and the like on this image data, and supplies the processed image data to the correction processing unit 102.

The correction processing unit 102 performs signal processing such as edge enhancement, gamma correction, and color-difference matrix conversion on the image data supplied from the image sensor 101, and supplies the processed image data to the image memory 103.

The image memory 103 temporarily stores the image data supplied from the correction processing unit 102, and supplies the image data to the smoothing processing unit 104, the interpolation processing unit 105, the recording medium 106, and the display unit 107. Moreover, the image memory 103 is divided into a plurality of storage areas, and these storage areas each manage a different type of data.

The smoothing processing unit 104 selects a calculation-target pixel from the image data supplied from the image memory 103, and performs smoothing processing on the selected calculation-target pixel. Then, the smoothing processing unit 104 supplies, to the image memory 103, image data constituted by calculation-target pixels on which the smoothing processing has been performed.

The interpolation processing unit 105 interpolates the pixel value of a pixel on which the smoothing processing was not performed as a calculation-target pixel by the smoothing processing unit 104, using the pixel values of calculation targets which are positioned around the pixel and on which the smoothing processing has been performed. Then, the interpolation processing unit 105 supplies, to the image memory 103, image data on which the interpolation processing has been performed.

The recording medium 106 records the image data supplied from the image memory 103. Moreover, the recording medium 106 supplies the image data that has been temporarily recorded to the image memory 103, as processing-target data.

The display unit 107 displays the image data supplied from the image memory 103 to a user.

The control unit 108 controls an operation of the entire digital camera 100. To the control unit 108, a command is supplied from a user via a predetermined user interface. The control unit 108 controls an operation of each of the above-described processing units in accordance with this command.

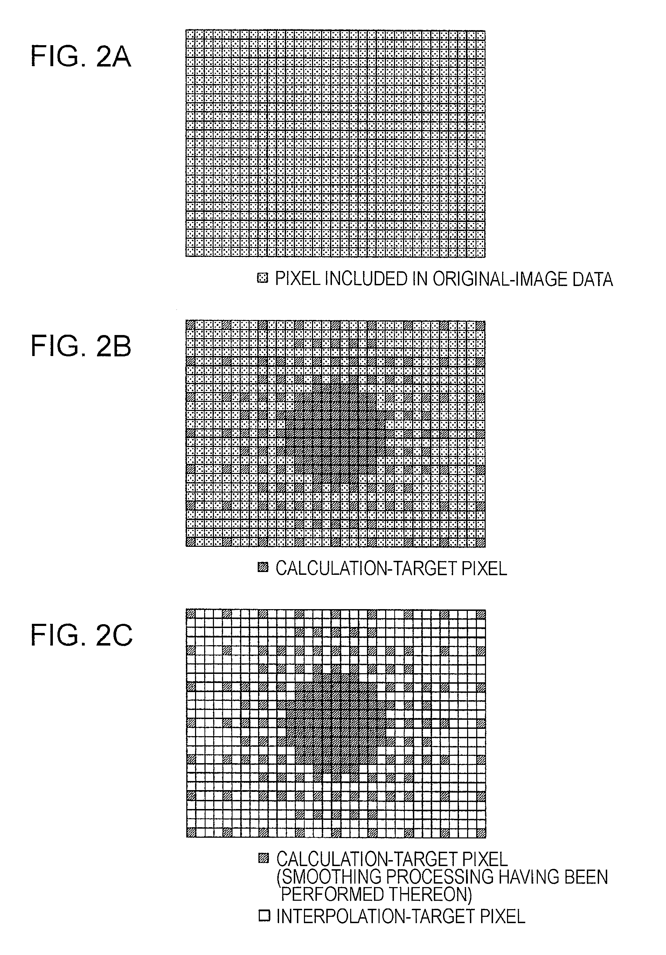

In this embodiment, among the above-described processing units of the digital camera 100, operations of the smoothing processing unit 104 and interpolation processing unit 105 that perform, on the image data, image processing for adding image effects as shown in Fig. 2A, Fig. 2B, and Fig. 2C will be mainly described.

Fig. 2A, Fig. 2B, and Fig. 2C are diagrams schematically showing, when the center within a screen is set as a reference point, an operation of the digital camera 100 that performs image processing for changing the resolution of image data in accordance with the distance from this reference point.

The smoothing processing unit 104 selects calculation-target pixels shown by oblique lines in Fig. 2B from among image data of processing targets (hereinafter referred to as original-image data) shown by dotted lines in Fig. 2A. Moreover, the smoothing processing unit 104 performs the smoothing processing on the calculation-target pixels shown in Fig. 2B, and thins out the pixel values of pixels other than the calculation-target pixels as shown in Fig. 2C. Moreover, the interpolation processing unit 105 performs the interpolation processing on the image data obtained by thinning out the pixel values of the pixels other than the calculation-target pixels (hereinafter referred to as thinned-out image data) as shown in Fig. 2C. In this way, through the above-described processing performed by the smoothing processing unit 104 and the interpolation processing unit 105, the digital camera 100 adds, to the original-image data, a blurring effect with which a blur caused in an image becomes larger as the distance from the center within the screen increases.

Here, in this embodiment, the reference point is set in the center within the screen, but is not limited to such a case. For example, the image data of a processing target is displayed on the display unit 107 and a user may arbitrarily set the reference point.

Next, an operation performed by the smoothing processing unit 104 will be described.

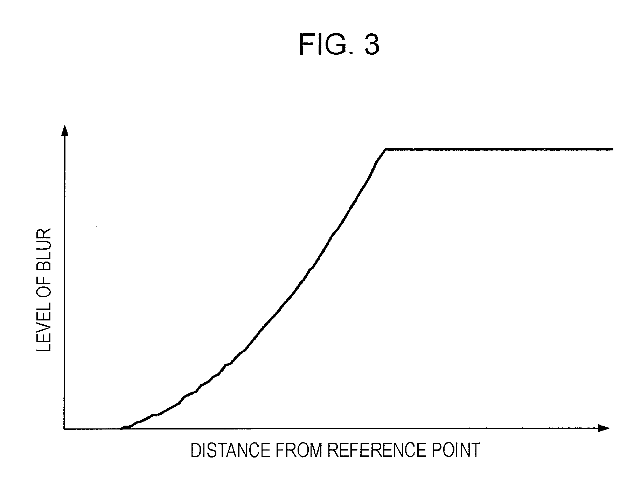

The smoothing processing unit 104 selects a calculation-target pixel from among the original-image data using a correspondence relationship as shown in Fig. 3. Fig. 3 is a diagram showing the distance from the reference point and how the level of blur changes with the distance. Here, the level of blur is an index showing how much an image is blurred.

Specifically, the smoothing processing unit 104 calculates the level of blur of each of all pixels in accordance with the distance thereof from the reference point. Then, the smoothing processing unit 104 performs the following determination processing in accordance with the calculated level of blur.

For each of the pixels, when the smoothing processing unit 104 calculates the level of blur of the pixel, the smoothing processing unit 104 calculates a thinning-out step from a correspondence relationship between the level of blur and a thinning-out step in accordance with the level of blur. Here, the thinning-out step is a spacing between pixels regarding pixels selected as calculation-target pixels. The smoothing processing unit 104 selects calculation-target pixels from within the screen in accordance with a correspondence relationship between the level of blur and the thinning-out step in such a manner that the spacing between pixels becomes larger as the distance from the reference point increases.

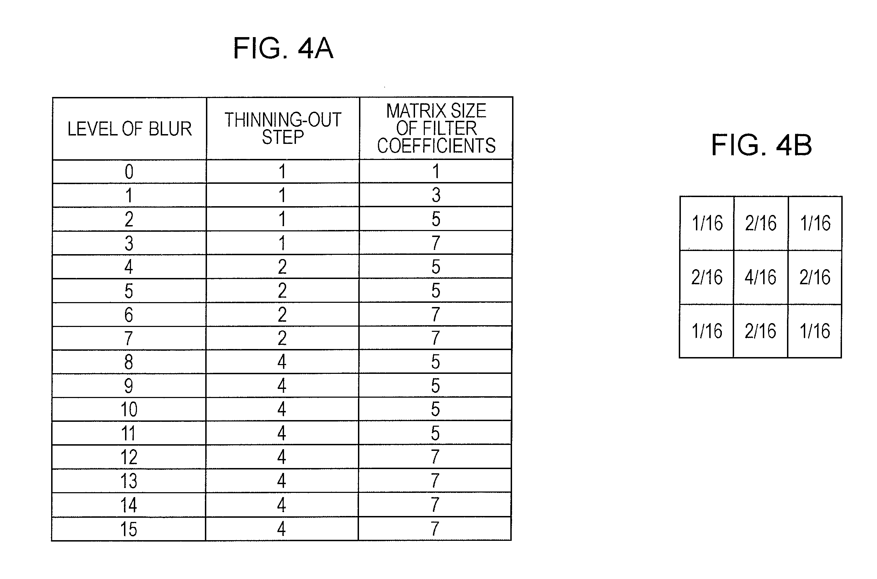

For example, as shown in Fig. 4A, regarding an area constituted by pixels whose thinning-out step has a value of 1, the smoothing processing unit 104 selects all pixels in the area as calculation-target pixels. Moreover, regarding an area constituted by pixels whose thinning-out step has a value of 2, the smoothing processing unit 104 selects every other pixel in the area as calculation-target pixels. Moreover, regarding an area constituted by pixels whose thinning-out step has a value of 4, the smoothing processing unit 104 selects every fourth pixel in the area as calculation-target pixels.

When the smoothing processing unit 104 has selected the calculation-target pixels from the image data, the smoothing processing unit 104 performs the smoothing processing on these calculation-target pixels. In the smoothing processing unit 104, as an example of the smoothing processing, weighted-average filtering processing is performed on the calculation-target pixels. Here, the smoothing processing unit 104 sets filter coefficients according to a weighted-average filter, each of which is set for a corresponding one of the pixel value of a calculation-target pixel and the pixel values of pixels around the calculation-target pixel, and performs the following weighted-average filtering processing.

The smoothing processing unit 104 sets the matrix size of the weighted-average filter used in the smoothing processing, from a correspondence relationship between the thinning-out step and the matrix size shown in Fig. 4A. Here, in the smoothing processing performed using the weighted-average filter, when the matrix size is increased, a greater blurring effect is given to a surrounding area of the calculation-target pixel. Thus, the smoothing processing unit 104 increases the matrix size as the level of blur increases. Here, as the value of the thinning-out step increases, the image area around the calculation-target pixel becomes more largely blurred. Thus, the smoothing processing unit 104 decreases the value of the thinning-out step at one end, and increases the matrix size of the filter coefficients as the level of blur increases under a similar thinning-out-step condition. For example, in Fig. 4A, when the level of blur changes from 3 to 4, the value of a thinning-out step increases from 1 to 2; however, the matrix size decreases from 7 to 5.

Next, as a specific example of the weighted-average filter, a description regarding MA processing regarding filter coefficients will be made with reference to Fig. 4B. In the weighted-average filtering processing using a weighted-average filter 3 x 3 whose matrix size is, trix size is, 3 x 3, as shown in Fig. 4B, the pixel value of a calculation-target pixel, the pixel in the center of the drawing, and the pixel values of a total of eight pixels positioned individually at the upper left, the top, the upper right, the left, the right, the lower left, the bottom, and the lower right of this calculation-target pixel are used, each of the pixels positioned at the upper left, the upper right, the lower left, and the lower right of the calculation-target pixel being positioned in a direction oblique to the calculation-target pixel.

Then, in the weighted-average filtering processing, the pixel value of a calculation-target pixel is smoothed by multiplying the calculation-target pixel and the surrounding pixels by the filter coefficients as shown in Fig. 4B and summing these multiplication results. For example, in the weighted-average filtering processing, the pixel value of the calculation-target pixel is multiplied by 4/16, the pixels positioned at the top, the bottom, the left, and the right of the calculation-target pixel are multiplied by 2/16, and the four pixels positioned in directions oblique to the calculation-target pixel are multiplied by 1/16.

The smoothing processing unit 104 performs the selection processing for selecting the calculation-target pixels and the smoothing processing for smoothing the pixel values of the selected calculation-target pixels, and supplies, to the image memory 103, thinned-out image data obtained by thinning out the pixel values of the pixels other than the calculation-target pixels.

Here, the smoothing processing unit 104 may smooth the pixel values of calculation-target pixels using, for example, averaging filter processing instead of the weighted-average filtering processing. The averaging filter processing is processing in which the pixel value of a calculation-target pixel and the pixel values of surrounding pixels are summed and the pixel value of the calculation-target pixel is smoothed by dividing this sum by the number of the pixels for which the summing has been performed.

Moreover, the digital camera 100 may include a storage medium other than the image memory 103 in which the original-image data has been stored, and may cause the thinned-out image data output from the smoothing processing unit 104 to be stored in this storage medium.

Next, an operation performed by the interpolation processing unit 105 will be described.

The interpolation processing unit 105 performs interpolation processing on a pixel whose pixel value has been thinned out (hereinafter referred to as an interpolation-target pixel) from among pixels constituting the thinned-out image data output from the smoothing processing unit 104, using calculation-target pixels on which the smoothing processing has been performed and which are positioned around the interpolation-target pixel. In this embodiment, as this interpolation processing, bilinear interpolation processing is used in which the amount of calculation regarding interpolation per pixel is relatively small.

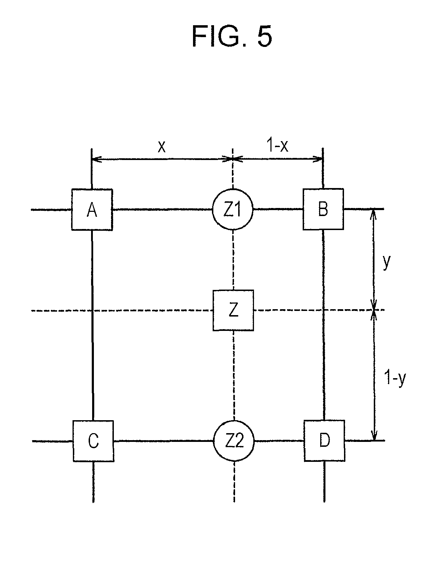

Fig. 5 is a diagram schematically showing bilinear interpolation processing. In bilinear interpolation processing, as shown in Fig. 5, the pixel value of an interpolation-target pixel Z is interpolated from the pixel values of four calculation-target pixels on which the smoothing processing has been performed and which are positioned around the interpolation-target pixel Z. These four calculation-target pixels were selected with a similar thinning-out step. The pixels obliquely positioned at the upper left, the upper right, the lower left, and the lower right of the interpolation-target pixel Z are, respectively, denoted by A, B, C, and D.

Moreover, a pixel at the position where a vertical extension line connecting the interpolation-target pixel Z crosses a horizontal line connecting the calculation-target pixels A and B is a pixel Z1, and the ratio between the distance from the A to the Z1 and the distance from the Z1 to the B is set to $x:(1 - x)$ $(0 \leq x \leq 1)$. Similarly, when a pixel at the position where the vertical extension line connecting the interpolation-target pixel Z crosses a horizontal line connecting the calculation-target pixels C and D is a pixel Z2, the ratio between the distance from the C to the Z2 and the distance from the Z2 to the D is set to $x:(1 - x)$. Moreover, the ratio between the distance from the Z1 to the Z and the distance from the Z to the Z2 is set to $y:(1 - y)$ $(0 \leq y \leq 1)$.

In bilinear interpolation processing, first, a pixel value $P(Z1)$ of the pixel Z1 and a pixel value $P(Z2)$ are calculated, respectively, from Eq. (1) and Eq. (2) expressed below. Here, the pixel values of the calculation-target pixels A, B, C, and D are denoted by $P(A)$, $P(B)$, $P(C)$, and $P(D)$, respectively.

$$P(Z1) = (1 - x) \times P(A) + x \times P(B) \qquad \text{Eq. (1)}$$

$$P(Z2) = (1 - x) \times P(C) + x \times P(D) \qquad \text{Eq. (2)}$$

In bilinear interpolation processing, a pixel value P(Z) of the interpolation-target pixel Z is calculated from Eq. (3) expressed below, using calculation results from Eq. (1) and Eq. (2).

$$P(Z) = (1 - y) \times P(Z1) + y \times P(Z2) \qquad \text{Eq. (3)}$$

In this way, the interpolation processing unit 105 calculates the pixel value of the interpolation-target pixel by the above-described bilinear interpolation processing.

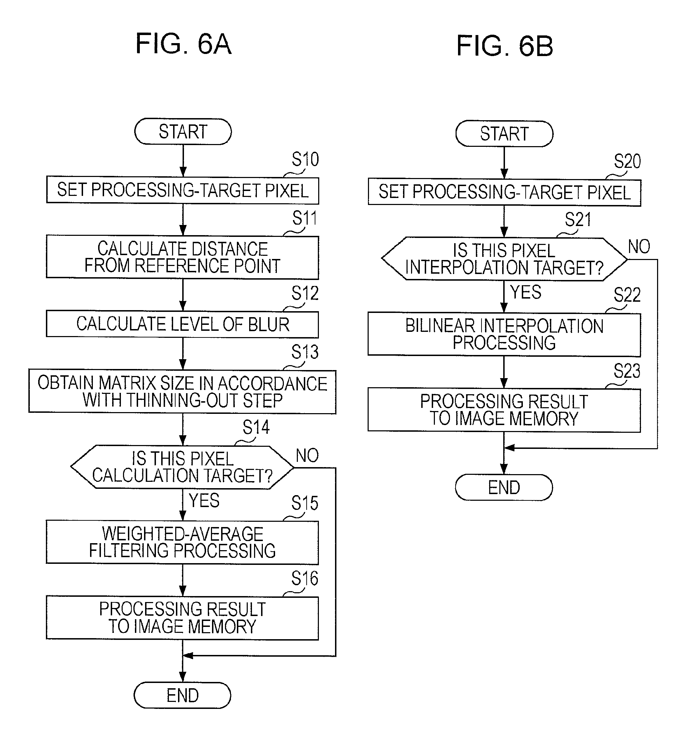

Next, operations of the smoothing processing unit 104 and interpolation processing unit 105 will be described in detail with reference to Fig. 6A and Fig. 6B. Fig. 6A is a flowchart showing an operation of the smoothing processing unit 104, and Fig. 6B is a flowchart showing an operation of the interpolation processing unit 105.

As a premise, the control unit 108 selects original-image data from image data recorded on the recording medium 106 in accordance with a user command from a user interface and supplies the original-image data to the image memory 103. Then, the control unit 108 causes the smoothing processing unit 104 to perform the processing shown in Fig. 6A in accordance with an image-processing program.

In step S10, the smoothing processing unit 104 sets a pixel to be a processing target from among the original-image data. Here, the smoothing processing unit 104 sets, as an initial processing target, a pixel at the upper left end within the screen, the upper left end being a starting point in a scanning direction.

In step S11, the smoothing processing unit 104 calculates the distance from the position of the processing-target pixel set in step S10 to the reference point.

In step S12, the smoothing processing unit 104 calculates the level of blur according to the distance calculated in step S11, using a level-of-blur function shown in Fig. 3.

In step S13, the smoothing processing unit 104 calculates a thinning-out step of the processing-target pixel and a matrix size of filter coefficients using a correspondence relationship shown in Fig. 4A.

In step S14, the smoothing processing unit 104 determines whether the current processing-target pixel should be set as a calculation-target pixel on the basis of the thinning-out step obtained in step S13 and a positional relationship between the current processing-target pixel and the pixel which has been selected as a calculation-target pixel before the current processing. If the smoothing processing unit 104 determines that this processing-target pixel should be set as a calculation-target pixel, the procedure proceeds to step S15. If the smoothing processing unit 104 determines that this processing-target pixel should not be set as a calculation-target pixel, the processing procedure regarding this processing-target pixel is completed.

In step S15, the smoothing processing unit 104 reads, from the image memory 103, necessary data necessary for smoothing the calculation-target pixel. Here, the necessary data includes the pixel value of the calculation-target pixel and the pixel values of pixels positioned around the calculation-target pixel in accordance with the matrix size of filter coefficients. For example, when the matrix size of filter coefficients is 3 x 3, nine pixel values in total, including the pixel value of the calculation-target pixel, are read from the image memory 103. Then, the smoothing processing unit 104 performs weighted-average filtering processing on the calculation-target pixel, using the pixel values read from the image memory 103.

In step S16, the smoothing processing unit 104 writes, into the image memory 103, the calculation-target pixel on which the smoothing processing has been performed using the weighted-average filter in step S15, and the processing procedure regarding this processing-target pixel is completed.

The smoothing processing unit 104 sets, as a processing-target pixel, each of the pixels in the scanning direction within the screen, and performs processing in each of step S11 through step S16 on the pixel. In this way, the smoothing processing unit 104 smoothes all the pixel values of selected calculation-target pixels and stores the thinned-out image data in the image memory 103.

If the control unit 108 determines that the above-described processing has been completed which is performed on all the pixels of the image data by the smoothing processing unit 104 in accordance with the image-processing program, the control unit 108 causes the interpolation processing unit 105 to perform the processing as shown in Fig. 6B.

In step S20, the interpolation processing unit 105 sets a pixel as a processing-target pixel from among the thinned-out image data and performs the following processing. Here, the interpolation processing unit 105 sets, as an initial processing target, the pixel at the upper left end within the screen, the upper left end being the starting point in the scanning direction. In step S21, the interpolation processing unit 105 determines whether this processing-target pixel is an interpolation-target pixel in accordance with the pixel value of the processing-target pixel. If the interpolation processing unit 105 determines that the processing-target pixel is an interpolation-target pixel, the procedure proceeds to step S22. If the interpolation processing unit 105 determines that the processing-target pixel is not an interpolation-target pixel, the interpolation processing unit 105 completes the processing regarding this processing-target pixel.

In step S22, the interpolation processing unit 105 reads, from the image memory 103, the pixel data of each of four calculation-target pixels necessary for interpolation of the pixel data of the interpolation-target pixel. Then, the interpolation processing unit 105 performs the above-described bilinear interpolation processing on the interpolation-target pixel using four items of the read pixel data, and interpolates the pixel value of the interpolation-target pixel.

In step S23, the interpolation processing unit 105 supplies, to the image memory 103, the pixel value which has been interpolated in step S22, and the interpolation processing unit 105 completes the processing regarding this processing-target pixel.

The interpolation processing unit 105 sets, as a processing-target pixel, each of the pixels in the scanning direction within the screen, performs processing in each of step S20 through step S23 on the pixel, and completes the processing performed by the interpolation processing unit 105.

Here, in the above-described processing procedure, each of the smoothing processing unit 104 and the interpolation processing unit 105 performs corresponding processing on all the pixels in units of one screen, but is not limited to such an embodiment. Such processing may be performed on each of the pixels in units of a block including a plurality of pixels. In this way, when such processing is performed in units of a block, the amount of space of the image memory 103 used for the thinning-out image data can be small. Moreover, when thinned-out image data is set in units of one screen, the interpolation processing unit 105 cannot start its processing unless the processing in the smoothing processing unit 104 is finished. In contrast, by setting the thinned-out image data in units of the above described block, the control unit 108 can subsequently supply the thinned-out image data on which the processing has been performed by the smoothing processing unit 104, to the interpolation processing unit 105, in units of the block. Thus, the interpolation processing unit 105 can start its processing before the processing in the smoothing processing unit 104 is completed, and thus the interpolation processing unit 105 can shorten the entire processing time.

In this way, the digital camera 100 can add an effect of changing the resolution to the original-image data as the distance from the reference point on the image surface increases.

Incidentally, hitherto, in order to add such a blurring effect to the original-image data without the resolution near the reference point of the original-image data being degraded, the matrix size of filter coefficients has been set for all the pixels constituting the original-image data in accordance with the level of blur and the smoothing processing has been performed on all the pixels. In contrast to such a conventional image processing technique, in this embodiment, the number of pixels on which the smoothing processing is performed decreases, but the processing for interpolating pixels that are far from the reference point is necessary.

However, in this embodiment, the amount of interpolation processing per pixel is smaller than the amount of smoothing processing per pixel. Thus, the above-described image effect can be added to the original-image data with a smaller amount of processing than before while the resolution near the reference point is not degraded.

The reasons for this are as follows. As the distance from the reference point increases, the smoothing processing unit 104 performs processing by referring to the pixel values of quite a few number of pixels such as 3 x 3, 5 x 5, or 7 x 7 in accordance with the above-described weighted-average filter and the averaging filter processing. In contrast, the interpolation processing unit 105 performs processing on all the interpolation-target pixels by referring to the pixel values of 2 x 2 pixels in accordance with the above-described bilinear interpolation processing. Thus, in this embodiment, interpolation processing is necessary in an area other than the area constituted by pixels whose thinning-out step has a value of 1; however, since the amount of processing per pixel is smaller than that of smoothing processing, the amount of calculation can be decreased and a blurring effect similar to a conventional blurring effect can be added to the original-image data.

Here, the digital camera 100 interpolates an interpolation-target pixel by performing bilinear interpolation processing, but is not limited thereto. As an interpolation processing method in which the amount of processing per pixel is smaller than that of smoothing processing, for example, a nearest neighbor method (which is also called a nearest neighbor method) may be used in which an interpolation-target pixel is interpolated from the pixel value of a calculation-target pixel that is positioned nearest to the interpolation-target pixel.

Furthermore, since the amount of calculation is reduced, the digital camera 100 can reduce the consumption power in a case of performing the above-described blur processing.

Here, the present invention is not limited to only the above-described embodiments. As a matter of course, various changes can be made within the scope that does not depart from the gist of the present invention.

Moreover, the series of pieces of processing in the above-described embodiment can be executed by software. In this case, a program constituting the software may be installed in advance into hardware designed for digital cameras.

**Claims**

1.  An image processing apparatus for changing the resolution of image data in accordance with the distance from a reference point arbitrarily set within a screen showing the image data, comprising:

    selection means for selecting, from the image data, calculation-target pixels that are arranged in such a manner that the spacing between pixels becomes larger as the distance from the reference point increases;
    smoothing processing means for smoothing the calculation-target pixels selected by the selection means using the pixel values of the calculation-target pixels and the pixel values of pixels positioned around the calculation-target pixels; and
    interpolation processing means for interpolating the pixel values of pixels which have not been selected as the calculation-target pixels by the selection means, from the pixel values of calculation-target pixels positioned around the pixels, the calculation-target pixels having been smoothed by the smoothing processing means.

2.  The image processing apparatus according to Claim 1, **characterized in that**: in an area in which the calculation-target pixels are arranged with a predetermined spacing therebetween within the screen showing the image data, as the distance from the reference point increases, the smoothing processing means smoothes the calculation-target pixels using the pixel values of a greater number of pixels positioned around the calculation-target pixels.

3.  An image processing method for changing the resolution of image data in accordance with the distance from a reference point arbitrarily set within a screen showing the image data, comprising:

    selecting, from the image data, calculation-target pixels that are arranged in such a manner that the spacing between pixels becomes larger as the distance from the reference point increases;
    smoothing the selected calculation-target pixels using the pixel values of the calculation-target pixels and the pixel values of pixels positioned around the calculation-target pixels; and
    interpolating the pixel values of pixels which have not been selected as the calculation-target pixels, from the pixel values of calculation-target pixels positioned around the pixels, the calculation-target pixels having been smoothed.

4.  A program for causing a computer to execute image processing for changing the resolution of image data in accordance with the distance from a reference point arbitrarily set within a screen showing the image data, comprising:

    a selection step of selecting, from the image data, calculation-target pixels that are arranged in such a manner that the spacing between individual pixels becomes larger as the distance from the reference point increases;
    a smoothing-processing step of smoothing the pixel value of the calculation-target pixels selected in the selection step, using the pixel values of the calculation-target pixels and the pixel values of pixels positioned around the calculation-target pixels; and
    an interpolation-processing step of interpolating the pixel values of pixels which have not been selected as the calculation-target pixels, from the pixel values of calculation-target pixels positioned around the pixels, the calculation-target pixels having been smoothed in the smoothing-processing step.

EP 2 061 227 A1

FIG. 1

9

FIG. 2A

⊠ PIXEL INCLUDED IN ORIGINAL-IMAGE DATA

FIG. 2B

▩ CALCULATION-TARGET PIXEL

FIG. 2C

▩ CALCULATION-TARGET PIXEL
(SMOOTHING PROCESSING HAVING BEEN
PERFORMED THEREON)
☐ INTERPOLATION-TARGET PIXEL

FIG. 3

LEVEL OF BLUR

DISTANCE FROM REFERENCE POINT

# FIG. 4A

| LEVEL OF BLUR | THINNING-OUT STEP | MATRIX SIZE OF FILTER COEFFICIENTS |
|---|---|---|
| 0 | 1 | 1 |
| 1 | 1 | 3 |
| 2 | 1 | 5 |
| 3 | 1 | 7 |
| 4 | 2 | 5 |
| 5 | 2 | 5 |
| 6 | 2 | 7 |
| 7 | 2 | 7 |
| 8 | 4 | 5 |
| 9 | 4 | 5 |
| 10 | 4 | 5 |
| 11 | 4 | 5 |
| 12 | 4 | 7 |
| 13 | 4 | 7 |
| 14 | 4 | 7 |
| 15 | 4 | 7 |

# FIG. 4B

| 1/16 | 2/16 | 1/16 |
|---|---|---|
| 2/16 | 4/16 | 2/16 |
| 1/16 | 2/16 | 1/16 |

EP 2 061 227 A1

# FIG. 5

# FIG. 6A

```
          ┌─────────┐
          │  START  │
          └─────────┘
               │         S10
               ▼
┌──────────────────────────────┐
│  SET PROCESSING-TARGET PIXEL  │
└──────────────────────────────┘
               │         S11
               ▼
┌──────────────────────────────┐
│       CALCULATE DISTANCE      │
│     FROM REFERENCE POINT      │
└──────────────────────────────┘
               │         S12
               ▼
┌──────────────────────────────┐
│     CALCULATE LEVEL OF BLUR   │
└──────────────────────────────┘
               │         S13
               ▼
┌──────────────────────────────────────┐
│  OBTAIN MATRIX SIZE IN ACCORDANCE     │
│     WITH THINNING-OUT STEP            │
└──────────────────────────────────────┘
               │         S14
               ▼
        ╱─────────────────╲      NO
       ⟨    IS THIS PIXEL   ⟩──────────┐
        ╲ CALCULATION TARGET?╱          │
               │ YES                    │
               │         S15            │
               ▼                        │
┌──────────────────────────────┐        │
│      WEIGHTED-AVERAGE         │        │
│    FILTERING PROCESSING       │        │
└──────────────────────────────┘        │
               │         S16            │
               ▼                        │
┌──────────────────────────────┐        │
│      PROCESSING RESULT        │        │
│       TO IMAGE MEMORY         │        │
└──────────────────────────────┘        │
               │◄───────────────────────┘
               ▼
          ┌─────────┐
          │   END   │
          └─────────┘
```

# FIG. 6B

```
          ┌─────────┐
          │  START  │
          └─────────┘
               │         S20
               ▼
┌──────────────────────────────┐
│  SET PROCESSING-TARGET PIXEL  │
└──────────────────────────────┘
               │         S21
               ▼
        ╱─────────────────╲      NO
       ⟨    IS THIS PIXEL   ⟩──────────┐
        ╲INTERPOLATION TARGET?╱         │
               │ YES                    │
               │         S22            │
               ▼                        │
┌──────────────────────────────┐        │
│    BILINEAR INTERPOLATION     │        │
│         PROCESSING            │        │
└──────────────────────────────┘        │
               │         S23            │
               ▼                        │
┌──────────────────────────────┐        │
│      PROCESSING RESULT        │        │
│       TO IMAGE MEMORY         │        │
└──────────────────────────────┘        │
               │◄───────────────────────┘
               ▼
          ┌─────────┐
          │   END   │
          └─────────┘
```

## INTERNATIONAL SEARCH REPORT

| | International application No. |
|---|---|
| | PCT/JP2007/066285 |

A.  CLASSIFICATION OF SUBJECT MATTER
*H04N1/387*(2006.01)i, *G06T3/40*(2006.01)i

According to International Patent Classification (IPC) or to both national classification and IPC

B.  FIELDS SEARCHED

Minimum documentation searched (classification system followed by classification symbols)
H04N1/387, G06T3/40

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 7-200816 A  (Daikin Industries, Ltd.), 04 August, 1995 (04.08.95), Full text; Figs. 1 to 12 (Family: none) | 1-4 |
| A | JP 2005-208182 A  (Sony Corp.), 04 August, 2005 (04.08.05), Full text; Figs. 1 to 18 & US 2005/0180740 A1 | 1-4 |

| ☐ | Further documents are listed in the continuation of Box C. | ☐ | See patent family annex. |

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 09 November, 2007 (09.11.07) | Date of mailing of the international search report 20 November, 2007 (20.11.07) |
|---|---|
| Name and mailing address of the ISA/ Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006244755 A
- JP 5081951 A